# EUROPEAN PATENT APPLICATION

(11) **EP 3 756 815 A1**
(43) Date of publication of application: **30.12.2020**
(21) Application number: 20182293.9
(22) Date of filing: 25.06.2020
(51) Int. Cl.: B23K 20/12, B23K 33/00, B23K 103/02, B23K 103/04, B23K 103/14

(54) **LINEAR FRICTION WELDING METHOD**

(30) Priority: 26.06.2019 JP 2019118188
(71) Applicant: The University of Tokyo, Bunkyo-ku, Tokyo 113-8654 (JP)
(72) Inventor: KHAN, Sabrina Alam, Tokyo, 113-8654 (JP); SEKIDO, Kenji, Tokyo, 113-8654 (JP); HIGUCHI, Takuya, Tokyo, 113-8654 (JP); YANAGIMOTO, Jun, Tokyo, 113-8654 (JP); ZAITSU, Masayoshi, Kobe, Hyogo 650-8680 (JP); KATO, Fumihiro, Kobe, Hyogo 650-8680 (JP); OKAUCHI, Hironori, Kobe, Hyogo 650-8680 (JP); YOKOYAMA, Takashi, Kobe, Hyogo 650-8680 (JP); OKADA, Hideki, Kobe, Hyogo 650-8680 (JP)
(74) Representative: Kuhnen & Wacker Patent- und Rechtsanwaltsbüro PartG mbB

(57) **Abstract**

There is provided a linear friction welding method of joining a first member with a second member. The linear friction welding method includes bringing a first plane, a second plane and a first corner portion in an R shape or in a chamfered shape of a first joint surface of the first member into contact with a third plane, a forth plane and a second corner portion in a shape that matches the shape of the first corner portion of a second joint surface of the second member; vibrating either the first member or the second member along an extending direction of the first corner portion and the second corner portion; and joining the first member with the second member by using frictional heat that is generated by friction between the first joint surface and the second joint surface.

## Description

### Technical Field

The present disclosure relates to a linear friction welding method.

### Background

A proposed procedure of linear friction welding method moves a structural member back and forth along a surface of a base member and thereby joins the structural member with the base member by linear friction welding (as described in, for example, US Patent No. 7,225,967).

### Citation List

### Patent Literature

PTL 1: US Patent No. 7225967

### Summary

In one example, a joint surface of the structural member that is to be joined with the base member is configured such that a first plane and a second plane having a first member-side angle of, for example, 90 degrees to the first plane are continuously formed via a salient angular portion. A joint surface of the base member that is to be joined with the structural member is configured such that a third plane and a fourth plane, which are respectively parallel to the first plane and the second plane, are continuously formed via a re-entrant angular portion. In this example, when the joint surface of the structural member is pressed against the joint surface of the base member and the structural member is moved back and forth, frictional heat generated on contact surfaces of the structural member and the base member may not be sufficiently transferred into the base member (more specifically, into the periphery of the re-entrant portion). This may result in inappropriately joining the base member with the structural member (for example, causing a defect such as a crack).

A main object of a linear friction welding method according to the present disclosure is to more appropriately join two members with each other by linear friction welding.

In order to achieve the above primary object, the liner friction welding method of the present disclosure employs the following configuration.

The present disclosure is directed to a liner friction welding method. In the linear friction welding method of joining a first member with a second member, a first joint surface of the first member that is to be joined with the second member is configured such that a first plane and a second plane having a first member-side angle of smaller than 180 degrees to the first plane are continuously formed via a first corner portion in an R shape or in a chamfered shape, and a second joint surface of the second member that is to be joined with the first member is configured such that a third plane and a fourth plane, which are respectively parallel to the first plane and the second plane, are continuously formed via a second corner portion in a shape that matches the shape of the first corner portion. And the linear friction welding method includes bringing the first plane, the first corner portion and the second plane of the first joint surface into contact with the third plane, the second corner portion and the fourth plane of the second joint surface, vibrating either the first member or the second member along an extending direction of the first corner portion and the second corner portion, and joining the first member with the second member by using frictional heat that is generated by friction between the first joint surface and the second joint surface.

In the linear friction welding method according to this aspect of the present disclosure, the first joint surface of the first member that is to be joined with the second member is configured such that the first plane and the second plane having the first member-side angle of smaller than 180 degrees to the first plane are continuously formed via the first corner portion in the R shape or in the chamfered shape. The second joint surface of the second member that is to be joined with the first member is configured such that the third plane and the fourth plane, which are respectively parallel to the first plane and the second plane, are continuously formed via the second corner portion in the shape that matches the shape of the first corner portion. The linear friction welding method brings the first plane, the first corner portion and the second plane of the first joint surface into contact with the third plane, the second corner portion and the fourth plane of the second joint surface, vibrates either the first member or the second member along the extending direction of the first corner portion and the second corner portion, and joins the first member with the second member by using the frictional heat that is generated by friction between the first joint surface and the second joint surface. This configuration of the first member and the second member enables the frictional heat to be more sufficiently transferred into the first member and into the second member and thereby enables the first member and the second member to be more appropriately joined with each other by linear friction welding. The inventors have confirmed these advantageous effects by experiments.

In the linear friction welding method described above, a radius of the R shape or a distance of the chamfered shape of the first corner portion may be determined such that a thermo mechanically affected zone appears in a periphery of the second corner portion in the second member when either the first member or the second member is vibrated. This configuration enables the first member and the second member to be furthermore appropriately joined with each other by linear friction welding.

In the linear friction welding method described above, the first member-side angle between the first plane and the second plane may be 90 degrees.

### Brief Description of Drawings

Fig. 1 is an external view illustrating a first member and a second member that are joined with each other by a linear friction welding method according to one embodiment of the present disclosure;
Fig. 2 is an external view illustrating a first member and a second member according to a comparative example;
Fig. 3 is a sectional view showing a cut section of a portion on the front side of Fig. 2 when a body of the first member and the second member of the comparative example joined by linear friction welding is cut along a plane encircled by a one-dot chain line in Fig. 2;
Fig. 4 is an observation view showing a portion A encircled by a solid line in the cut section of Fig. 3 and observed with an electron microscope;
Fig. 5 is an observation view showing a portion B encircled by a broken line in the cut section of Fig. 3 and observed with the electron microscope;
Fig. 6 is a sectional view showing a cut section of a portion on the front side of Fig. 1 when a body of the first member and the second member of the embodiment joined by linear friction welding is cut along a plane encircled by a one-dot chain line in Fig. 1;
Fig. 7 is an observation view showing a portion A encircled by a solid line in the cut section of Fig. 6 and observed with the electron microscope;
Fig. 8 is an observation view showing a portion B encircled by a broken line in the cut section of Fig. 6 and observed with the electron microscope;
Fig. 9 is an explanatory diagram illustrating one example of experiment results performed by the inventors to join the first member and the second member of the comparative example with each other by linear friction welding and to join the first member and the second member of the embodiment with each other by linear friction welding;
Fig. 10 is a diagram illustrating a process of joining the first member and the second member of the comparative example with each other by linear friction welding;
Fig. 11 is a diagram illustrating a process of joining the first member and the second member of the embodiment with each other by linear friction welding; and
Fig. 12 is an external view illustrating a first member and a second member according to a modification.

### Description of Embodiments

The following describes aspects of the present disclosure with reference to an embodiment.

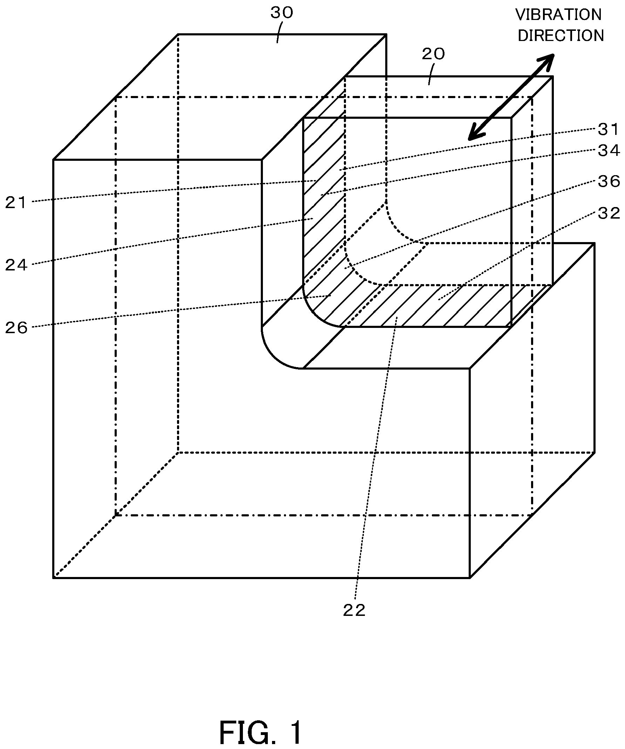

Fig. 1 is an external view illustrating a first member 20 and a second member 30 that are joined with each other by a linear friction welding method according to one embodiment of the present disclosure. This external view illustrates a state that joint surfaces (shown by a hatched portion in Fig. 1) of the first member 20 and the second member 30 are brought into contact with each other before the first member 20 and the second member 30 are joined with each other. A plane encircled by a one-dot chain line in Fig. 1 will be described later. As illustrated, the first member 20 and the second member 30 are formed from a hard-to-cut material, for example, 64 titanium alloy, iron or stainless steel, to have oxide films on the respective surfaces thereof. The first member 20 is formed in a rectangular parallelepiped, and the second member 30 is formed in an L shape when being viewed from a front side of Fig. 1.

A first joint surface 21 of the first member 20 that is to be joined with the second member 30 is configured such that a first plane 22 and a second plane 24 arranged at a first member 20-side angle of 90 degrees to the first plane 22 are continuously formed via an R-shaped first corner portion 26. A method of setting a radius of the R shape will be described later.

A second joint surface 31 of the second member 30 that is to be joined with the first member 20 is configured such that a third plane 32 and a fourth plane 34, which are respectively parallel to the first plane 22 and the second plane 24 of the first member 20, are continuously formed via a second corner portion 36 in such a shape that matches the shape of the first corner portion 26. Accordingly, a second member 30-side angle between the third plane 32 and the fourth plane 34 is 270 degrees, and the second corner portion 36 is formed in an R shape of an identical radius with the radius of the first corner portion 26.

The following describes a procedure of the linear friction welding method to join the first member 20 with the second member 30. The procedure first respectively brings the first plane 22, the first corner portion 26 and the second plane 24 of the first joint surface 21 of the first member 20 into contact with (pressure contact with) the third plane 32, the second corner portion 36 and the fourth plane 34 of the second joint surface 31 of the second member 30. The procedure subsequently vibrates (slides) the first member 20 along an extending direction of the first corner portion 26 and the second corner portion 36 (a direction of thick arrow shown in Fig. 1). This vibration (sliding) scrapes the respective contact surfaces of the first member 20 and the second member 30. Accompanied with this vibration, friction heat is generated on the respective contact surfaces of the first member 20 and the second member 30 and is transferred into the first member 20 and into the second member 30 to cause a plastic change in contact layers in the first member 20 and in the second member 30 (contact planes and contact layers of the first member 20 and the second member 30 by pressure contact). After scraping of the oxide films of the first member 20 and the second member 30 and a sufficient plastic change occurring in the contact layers of the first member 20 and the second member 30, the procedure stops the vibration of the first member 20 and presses the second member 30 against the first member 20. This joins the first member 20 with the second member 30.

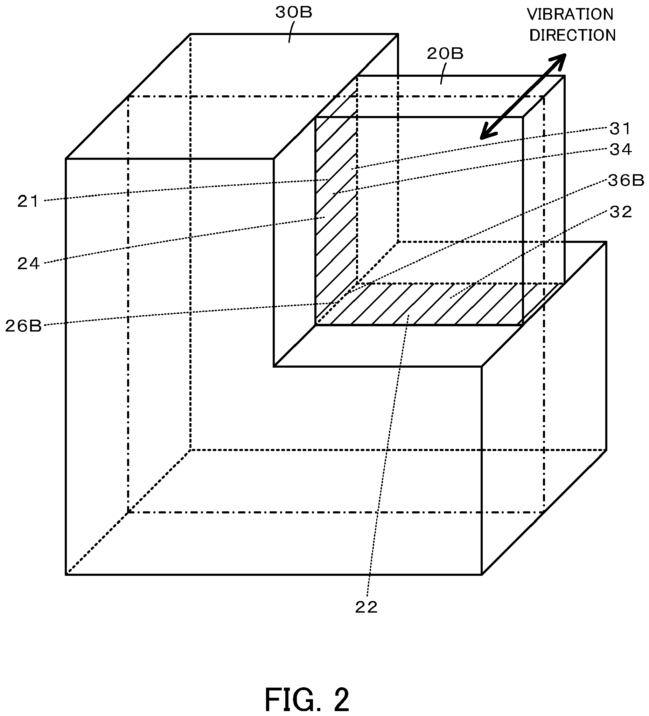

Fig. 2 is an external view illustrating a first member 20B and a second member 30B according to a comparative example. This external view illustrates a state that joint surfaces (shown by a hatched portion in Fig. 2) of the first member 20B and the second member 30B are brought into contact with each other before the first member 20B and the second member 30B are joined with each other. A plane encircled by a one-dot chain line in Fig. 2 will be described later. The first member 20B of the comparative example has a configuration similar to the configuration of the first member 20 of the embodiment, except that the R-shaped first corner portion 26 is replaced by a first corner portion 26B formed as a salient angular portion having a first member 20B-side angle of 90 degrees. The second member 30B of the comparative example has a configuration similar to the configuration of the second member 30 of the embodiment, except that the R-shaped second corner portion 36 is replaced by a second corner portion 36B formed as a re-entrant angular portion having a second member 30B-side angle of 270 degrees. The first member 20B and the second member 30B of this comparative example are joined with each other by the same procedure of the linear friction welding method as that of the embodiment described above.

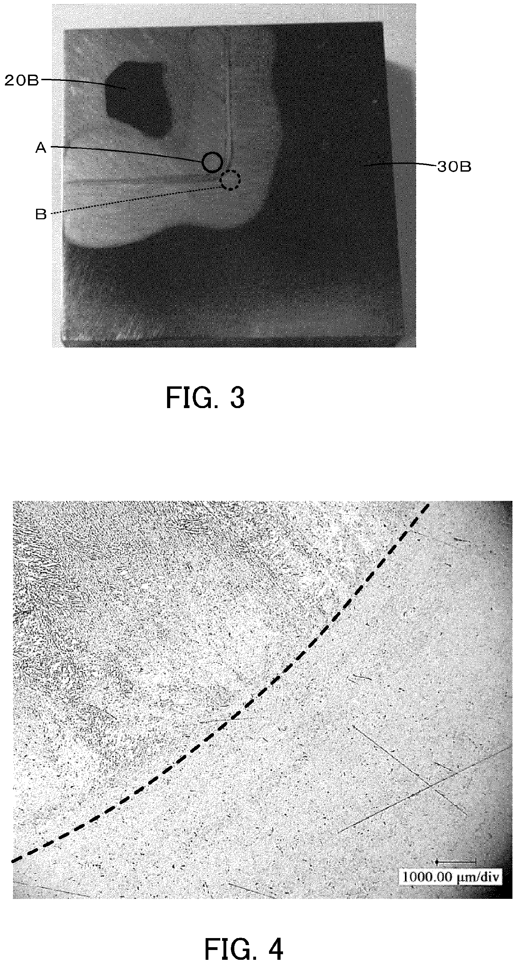

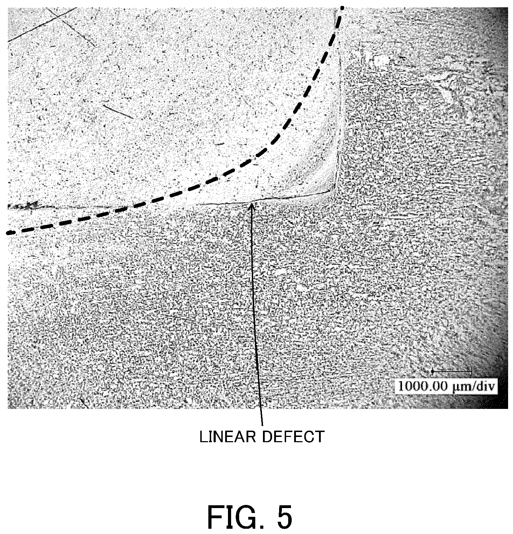

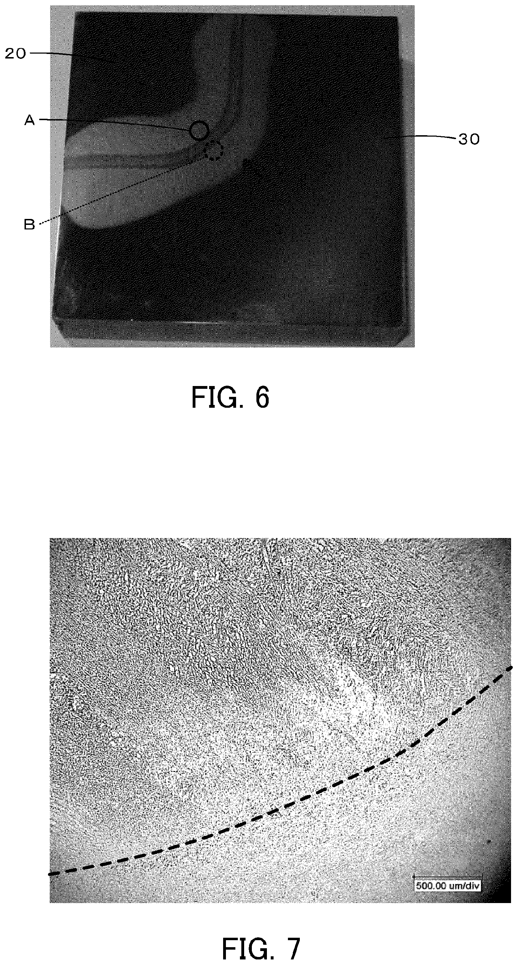

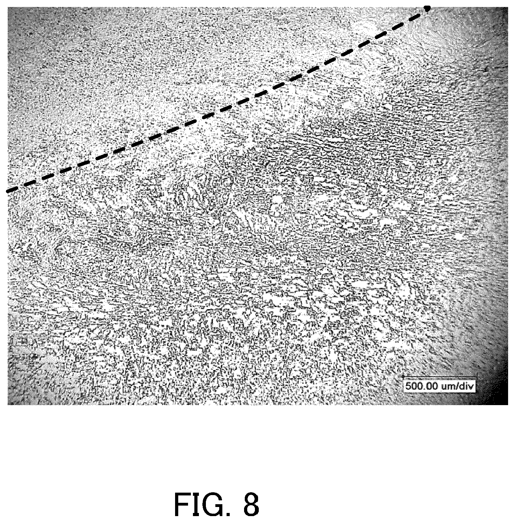

Fig. 3 is a sectional view showing a cut section of a portion on the front side of Fig. 2 (i.e., a cut section viewed from the back side) when a body of the first member 20B and the second member 30B of the comparative example joined by linear friction welding is cut along the plane encircled by the one-dot chain line in Fig. 2. Fig. 4 is an observation view showing a portion A (a portion of the first member 20B) encircled by a solid line in the cut section of Fig. 3 and observed with an electron microscope. Fig. 5 is an observation view showing a portion B (a portion of the second member 30B) encircled by a broken line in the cut section of Fig. 3 and observed with the electron microscope. Fig. 6 is a sectional view showing a cut section of a portion on the front side of Fig. 1 (i.e., a cut section viewed from the back side) when a body of the first member 20 and the second member 30 of the embodiment joined by linear friction welding is cut along the plane encircled by the one-dot chain line in Fig. 1. Fig. 7 is an observation view showing a portion A (a portion of the first member 20) encircled by a solid line in the cut section of Fig. 6 and observed with the electron microscope. Fig. 8 is an observation view showing a portion B (a portion of the second member 30) encircled by a broken line in the cut section of Fig. 6 and observed with the electron microscope. With a view to making the microstructures of the respective cut sections readily observable, the cut sections were polished and an etching solution was applied on the cut sections, before the views of Figs. 3 to 5 and the views of Figs. 6 to 8 were obtained. The etching solution provides portions appearing white on the boundaries between the first member 20B and the second member 30B of Fig. 3 and between the first member 20 and the second member 30 of Fig. 6.

The inventors have observed the microstructure in the first member 20B shown in Fig. 4 and have confirmed the appearance of a joint zone with the second member 30B on a lower right side (second member 30B-side) of a curve of a fixed radius (shown as a broken line curve in Fig. 4) relative to the first corner portion 26B, the appearance of a TMAZ (thermo mechanically affected zone) along this curve on a side further away from the second member 30B than this curve, and the appearance of an acicular structure zone on a side further away from the second member 30B than the TMAZ. The inventors have also observed the microstructure in the second member 30B shown in Fig. 5 and have confirmed the appearance of a linear defect (for example, a crack or a vacancy) bent at approximately 90 degrees. The inventors have additionally observed the microstructure in the second member 30B shown in Fig. 5 and have confirmed the appearance of a joint zone with the first member 20B on an upper left side (first member 20B-side), the appearance of a curve of a fixed radius (shown as a broken line curve in Fig. 5) relative to the second corner section 36B but no appearance of a TMAZ or an acicular structure zone in the second member 30B without any plastic change on a side further away from the first member 20B than this curve.

The inventors have also observed the microstructure in the first member 20 shown in Fig. 7 and have confirmed the appearance of a joint zone with the second member 30 on a lower right side (second member 30-side) of a curve of a fixed radius (shown as a broken line curve in Fig. 7) relative to an intersection of respective extensions of the first plane 22 and the second plane 24 (corresponding to the position of the first corner portion 26B of the comparative example), the appearance of a TMAZ along this curve on a side further away from the second member 30 than this curve, and the appearance of an acicular structure zone on a side further away from the second member 30 than the TMAZ. The inventors have also observed the microstructure in the second member 30 shown in Fig. 8 and have confirmed the appearance of a joint zone with the first member 20 on an upper left side (first member 20-side) of a curve of a fixed radius (shown as a broken line curve in Fig. 8) relative to an intersection of respective extensions of the third plane 32 and the fourth plane 34 (corresponding to the position of the second corner portion 36B of the comparative example), the appearance of a TMAZ along this curve on a side further away from the first member 20 than this curve, and the appearance of an acicular structure zone on a side further away from the first member 20 than the TMAZ. The inventors have additionally confirmed no appearance of any defect (for example, a crack or a vacancy) in the first member 20 or in the second member 30 in the microstructures shown in Figs. 7 and 8. According to the embodiment, by taking into account the foregoing, the radius of the R shape is set, such that a TMAZ appears in the vicinity of the second corner portion 36 in the second member 30 (for example, in a range of about several µm to a hundred µm including the second corner portion 36) when the first member 20 is vibrated. For example, a procedure employable to set this radius may produce the first member 20 and the second member 30 with changing the radius of the R shape for experiment, join the first member 20 with the second member 30 by friction welding, cut a body of the first member 20 and the second member 30 joined with each other by the plane encircled by the one-dot chain line in Fig. 1, observe the cut section (as shown in Figs. 6 to 8), and set a radius in the state that a TMZA appears in the vicinity of the second corner portion 36 in the second member 30, as a specified value.

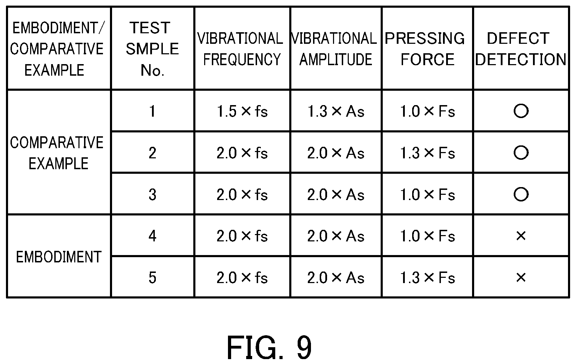

Fig. 9 is an explanatory diagram illustrating one example of experiment results performed by the inventors to join the first member 20B and the second member 30B of the comparative example with each other by linear friction welding and to join the first member 20 and the second member 30 of the embodiment with each other by linear friction welding. In this explanatory diagram, the "vibrational frequency" denotes a frequency when the first member 20 of the embodiment or the first member 20B of the comparative example is vibrated, and is expressed as a multiple of a reference frequency fs. The "vibrational amplitude" denotes an amplitude when the first member 20 of the embodiment or the first member 20B of the comparative example is vibrated, and is expressed as a multiple of a reference amplitude As. The "pressing force" denotes a pressure when the second member 30 is pressed against the first member 20, and is expressed as a multiple of a reference pressure Fs. In test samples 1 to 5, the first members 20 and 20B respectively have the first corner portions 26 and 26B of different shapes, i.e., the R shape and the salient angular portion, and the second members 30 and 30B respectively have the second corner portions 36 and 36B of different shapes, i.e., the R shape and the re-entrant angular portion.

According to the explanatory diagram of Fig. 9, a defect (for example, a crack or a vacancy) was detected in all the experiment results under three different conditions using the first member 20B and the second member 30B of the comparative example, whereas no defect was detected in either of the experiment results under two different conditions using the first member 20 and the second member 30 of the embodiment.

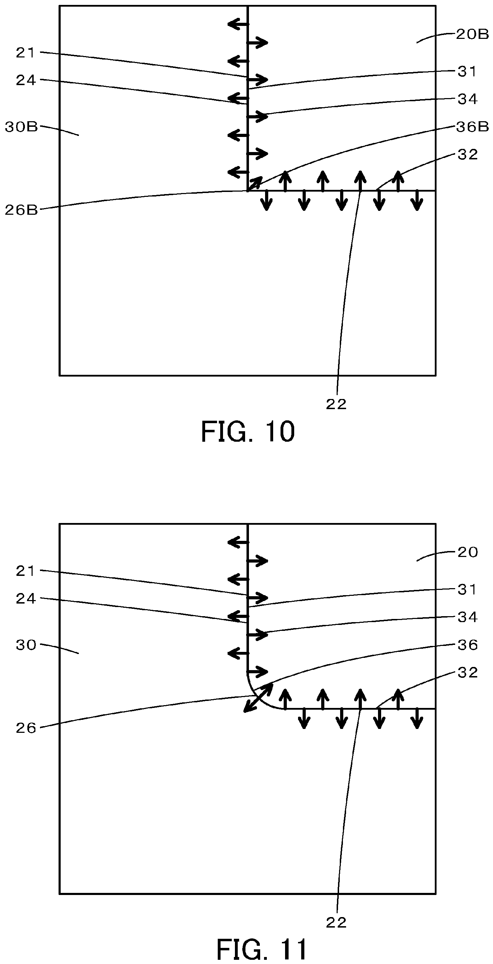

The following describes a reason why linear friction welding of the first member 20B and the second member 30B of the comparative example, is likely to cause a defect (for example, a crack or a vacancy) but linear friction welding of the first member 20 and the second member 30 of the embodiment suppresses the appearance of a defect. Fig. 10 is a diagram illustrating a process of joining the first member 20B and the second member 30B of the comparative example with each other by linear friction welding. Fig. 11 is a diagram illustrating a process of joining the first member 20 and the second member 30 of the embodiment with each other by linear friction welding. In Fig. 10 and Fig. 11, thick arrows indicate the flow of frictional heat generated in contact surface of the first member 20 or 20B and the second member 30 or 30B accompanied with vibration (sliding) of the first member 20 or 20B.

In the embodiment and the comparative example, the frictional heat generated on the contact surfaces of the first member 20 or 20B and the second member 30 or 30B accompanied with vibration (sliding) of the first member 20 or 20B is approximately equally transferred from their contact surfaces to the periphery. In the comparative example, as shown in Fig. 10, the first corner portion 26B of the first member 20B is formed as the salient angular portion, and the second corner portion 36B of the second member 30B is formed as the re-entrant angular portion. In this configuration, the frictional heat is likely to be sufficiently transferred from the first corner portion 26B into the first member 20B and thereby sufficiently soften the material of the first member 20B. The frictional heat is, however, unlikely to be sufficiently transferred from the second corner portion 36B into the second member 30B and thereby sufficiently soften the material of the second member 30B. This is expected to be the reason why a defect appears in the vicinity of the second corner portion 36B in the second member 30B as shown in Fig. 5. In the embodiment, as shown in Fig. 11, on the other hand, the first corner portion 26 and the second corner portion 36 are formed in the R shapes. In this configuration, the frictional heat is likely to be sufficiently transferred from the first corner portion 26 into the first member 20 and from the second corner portion 36 into the second member 30 and thereby sufficiently soften the material of the first member 20 and the second member 30. This is expected to be the reason why no linear defect appears in the vicinity of the second corner portion 36 of the second member 30 as shown in Fig. 8.

In the linear friction welding method of the embodiment described above, the first joint surface 21 of the first member 20 that is to be joined with the second member 30 is configured such that the first plane 22 and the second plane 24 having the first member 20-side angle of smaller than 180 degrees to the first plane 22 are continuously formed via the first corner portion 26 of the R shape. The second joint surface 31 of the second member 30 that is to be joined with the first member 20 is configured such that the third plane 32 and the fourth plane 34, which are respectively parallel to the first plane 22 and the second plane 24, are continuously formed via the second corner portion 36 in the shape that matches the shape of the first corner portion 26. The linear friction welding method of the embodiment brings the first plane 22, the first corner portion 26 and the second plane 24 of the first joint surface 21 into contact with the third plane 32, the second corner portion 36 and the fourth plane 34 of the second joint surface 31, vibrates (slides) the first member 20 along the extending direction of the first corner portion 26 and the second corner portion 36, and joins the first member 20 with the second member 30 by using the frictional heat generated in the course of such vibration. This configuration of the first member 20 and the second member 30 enables the frictional heat to be more sufficiently transferred into the first member 20 and into the second member 30 and thereby enables the first member 20 and the second member 30 to be more appropriately joined with each other by linear friction welding.

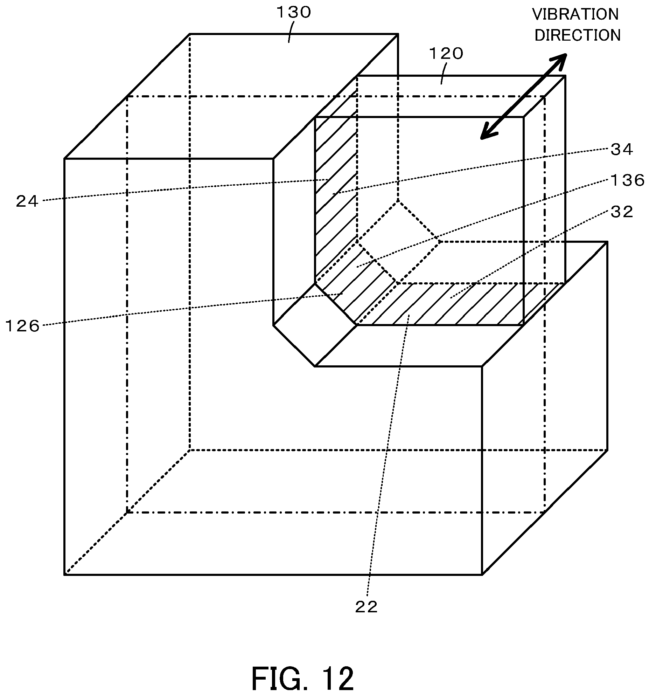

According to the embodiment, as shown in Fig. 1, the first corner portion 26 of the first member 20 is formed in the R shape, and the second corner portion 36 of the second member 30 is formed in the shape that matches the shape of the first corner portion 26. According to a modification, however, as shown in Fig. 12, a first corner portion 126 of a first member 120 may be formed in a chamfered shape, and a second corner portion 136 of a second member 130 may be formed in a shape that matches the shape of the first corner portion 126. The configuration of this modification has similar advantageous effects to those of the embodiment described above. Like the radius of the R shape of the first corner portion 26 according to the embodiment, it is preferable to set a distance of the chamfered shape, such that a TMAZ appears in the vicinity of the second corner portion 136 in the second member 130 when the first member 120 is vibrated.

According to the embodiment, as shown in Fig. 1, the first member 20 is configured to have the first member 20-side angle of 90 degrees between the first plane 22 and the second plane 24, and the second member 30 is configured such that the third plane 32 and the fourth plane 34 of the second member 30 are parallel to the first plane 22 and the second plane 24 of the first member 20. The first member 20-side angle between the first plane 22 and the second plane 24 is, however, not limited to 90 degrees but may be any angle in the range of smaller than 180 degrees, for example, 60 degrees, 70 degrees, 80 degrees, 100 degrees, 110 degrees or 120 degrees.

According to the embodiment, in the process of joining the first member 20 with the second member 30 by linear friction welding, the first member 20 is vibrated. According to a modification, however, the second member 30 may be vibrated in the process of linear friction welding.

According to the embodiment, as shown in Fig. 1, the length of the first member 20 in the extending direction of the first corner portion 26 (in the direction from the front left side to the right back side shown in Fig. 1) is shorter than the length of the second member 30 in the extending direction of the second corner portion 36. According to a modification, however, both the lengths may be approximately identical with each other, or the latter length may be shorter than the former length. Furthermore, according to the embodiment, as shown in Fig. 1, the first member 20 is formed in the rectangular parallelepiped and has the first joint surface 21, and the second member 30 is formed in the L shape and has the second joint surface 31. The shapes of the first member 20 and the second member 30 are, however, not limited to such shapes of the embodiment but may be any of various other shapes, as long as the first member 20 and the second member 30 are formed to respectively have the first joint surface 21 and the second joint surface 31. In these modifications, it is preferable to vibrate the member having the smaller energy requirement for the vibration, between the first member 20 and the second member 30, based on the masses and the dimensions of the first member 20 and the second member 30.

The following describes a correspondence relationship between the primary components of the embodiment described above and the primary components in the respective aspects of the present disclosure described in Summary. According to the embodiment, the first member 20 corresponds to the "first member", and the second member 30 corresponds to the "second member".

The correspondence relationship between the primary components of the embodiment and the primary components in the respective aspects of the present disclosure described in Summary is not at all intended to limit the components of the present disclosure described in Summary, since the embodiment described above is only illustrative for the purpose of concretely describing the aspects of the present disclosure described in Summary. In other words, the present disclosure described in Summary should be interpreted on the basis of the description in Summary, and the embodiment is only one concrete example of the present disclosure described in Summary.

Some aspects of the present disclosure are described above with reference to the embodiment. The present disclosure is, however, not at all limited to the description of the above embodiment but may be implemented in any of various other aspects without departing from the technical scope of the present disclosure.

### Industrial Applicability

The present disclosure is applicable to, for example, manufacturing industries which employ the linear friction welding method.

## Claims

1. A linear friction welding method of joining a first member (20, 120) with a second member (30, 130), **characterized in that**
a first joint surface (21) of the first member (20, 120) that is to be joined with the second member (30, 130) is configured such that a first plane (22) and a second plane (24) having a first member-side angle of smaller than 180 degrees to the first plane (22) are continuously formed via a first corner portion (26, 126) in an R shape or in a chamfered shape, and
a second joint surface (31) of the second member (30, 130) that is to be joined with the first member (20, 120) is configured such that a third plane (32) and a fourth plane (34), which are respectively parallel to the first plane (22) and the second plane (24), are continuously formed via a second corner portion (36, 136) in a shape that matches the shape of the first corner portion (26, 126),
the linear friction welding method comprising:
bringing the first plane (22), the first corner portion (26, 126) and the second plane (24) of the first joint surface (21) into contact with the third plane (32), the second corner portion (36, 136) and the fourth plane (34) of the second joint surface (31);
vibrating either the first member (20, 120) or the second member (30, 130) along an extending direction of the first corner portion (26, 126) and the second corner portion (36, 136); and
joining the first member (20, 120) with the second member (30, 130) by using frictional heat that is generated by friction between the first joint surface (21) and the second joint surface (31).

2. The linear friction welding method according to claim 1,
wherein a radius of the R shape or a distance of the chamfered shape of the first corner portion (26, 126) is determined such that a thermo mechanically affected zone appears in a periphery of the second corner portion (36, 136) in the second member (30, 130) when either the first member (20, 120) or the second member (30, 130) is vibrated.

3. The linear friction welding method according to claim 1 or 2,
wherein the first member (20, 120)-side angle between the first plane (22) and the second plane (24) is 90 degrees.
